# EUROPEAN PATENT APPLICATION

(11) **EP 0 826 721 A2**
(43) Date of publication of application: **04.03.1998**
(21) Application number: 97306678.0
(22) Date of filing: 29.08.1997
(51) Int. Cl.: C08J 3/12, C08L 83/04, C08G 77/38

(54) **Heat-curable silicone rubber composition**

(30) Priority: 30.08.1996 JP 248630/96
(71) Applicant: Dow Corning Toray Silicone Company, Ltd., Tokyo, 100 (JP)
(72) Inventor: Matsushita, Takao, Dow Corning Toray Silicone, Ichihara-shi, Chiba Prefecture (JP); Takuman, Osamu, Dow Corning Toray Silicone, Ichihara-shi, Chiba Prefecture (JP)
(74) Representative: Kyle, Diana

(57) **Abstract**

A cured silicone powder inhibited from evolving unpleasant odors with the passage of time, and an efficient method for preparation of the cured silicone powder, in which the surface of the cured silicone powder is treated with an alkali, by dipping the cured silicone powder in an aqueous alkaline solution.

## Description

This invention provides to heat-curable silicone rubber compositions whose cure yields a silicone rubber that has high mechanical strength and excellent electrical insulating properties.

Room temperature curing (RTC)silicone rubber compositions that contain zinc carbonate are already known JP-A 53-15939 (1978). These compositions cure to yield flame-retardant silicone rubbers. However, the cure of this silicone rubber composition develops gradually at room temperature in the presence of moisture through a condensation reaction, and several days are required for complete cure. Moreover, the cured product has low mechanical strength and cannot be used in some applications.

As a result of extensive investigations to solve these problems, we have found that admixture of large amounts of zinc carbonate into a particular heat curable (HC) silicone rubber composition provides a silicone rubber with high mechanicai strength and excellent high-voltage electrical insulating properties.

The object of the present invention is to introduce provide a HC silicone rubber composition that provides silicone rubber with high mechanical strength and excellent high-voltage electrical insulating properties.

Our HC silicone rubber composition comprises:
A) polyorganosiloxane gum described by average compositional formula

   RₐSiO_{(4-a)/2},

   where R represents substituted and unsubstituted monovalent hydrocarbon groups and a is a number from 1.95 to 2.05 and that contains at least 2 silicon-bonded alkenyl groups in each molecule,
(B) microparticulate silica,
(C) zinc carbonate powder or basic zinc carbonate powder,
   and
(D) organoperoxide.

The present invention is a heat-curable silicone rubber composition comprising:
(A) 100 weight parts of polyorganosiloxane gum represented by the formula

   RₐSiO_{(4-a)/2} ,

   where R represents substituted or unsubstituted monovalent hydrocarbon group, a is a number from 1.95 to 2.05, and at least two silicon-bonded alkenyl groups are present in each molecule,
(B) 1 to 60 weight parts of silica filler,
(C) 50 to 200 weight parts of zinc carbonate or basic zinc carbonate,
   and
(D) 0.1 to 10 weight parts of organoperoxide,
and a similar composition also comprising
(E) 5 to 200 weight parts of aluminum hydroxide Component (A), is represented by the average RₐSiO_{(4-a)/2} where R represents substituted or unsubstituted monovalent hydrocarbon groups. For example, R is alkyl groups such as methyl, ethyl, propyl, butyl, and octyl; alkenyl groups such as vinyl, allyl, butenyl, and hexenyl; aryl groups such as phenyl; and 3,3,3-trifluoropropyl, 2-phenylethyl, and 2-cyanoethyl. The subscript a is a number from 1.95 to 2.05. Component (A) contains at least two silicon-bonded alkenyl groups in each molecule. This alkenyl group may be bonded at terminal or non-terminal positions, or at both positions. The molecular structure of component (A) is straight chain or partially branched straight chain. The degree of polymerization (DP) of (A) is generally within the range of 1,000 to 20,000. Component (A) may be homopolymer or copolymer, or a mixture of these polymers. The nits that are present in (A) are dimethylsiloxy, vinylmethylsiloxy, methylpbenylsiloxy, and 3,3,3-trifluoropropylmethylsiloxy units. The molecular terminal groups in (A) are exemplified by trimethylsiloxy, silanol, vinyldimethylsiloxy, and vinylmethylhydroxysiloxy. Component (A) can be a polyorganosiloxane gum exemplified byvinyldimethylsiloxy-endblocked dimethylsiloxane vinylmethylsiloxane copolymer gums,vinyldimethylsiloxy-endblocked dimethylpolysiloxane gums,silanol-endblocked dimethylsiloxane-vinylmethylsiloxane copolymer gums, and vinylmethylhydroxysiloxy-endblocked dimethylsiloxaze-vinylmethylsiloxane copolymer gums.

The silica filler of component(B), which is a reinforcing or semi-reinforcing filler, imparts mechanicai strength to the silicone rubber afforded by cure of the present composition. These silicas are exemplified by dry-process silica (e.g., fumed silica) and wet-process silica (e.g., precipitated silica) and by semi-reinforcing silicas such as quartz and diatomaceous earth. Component (B) preferably has a particle size ≤ 50 µm and a specific surface area ≥ 50 m²/g, The surface hydrophobicization of this silica with an organosilicon compound, such as an organosilane, organosilazane, organosiloxane oligomer,and the like is also preferred. Component (B) is added at from 1 to 100 weight parts, and preferably at from 10 to 60 weight parts, in each case per 100 weight parts of component (A). The addition of less of component (B) will fail to provide a high mechanical strength, and admixtures of component (B) into component (A) become highly problematic when greater amounts than this range are added.

The admixture of component (C) provides a cured silicone rubber with excellent high-voltage electrical insulating properties. To avoid adverse effects on mechanical strength, the particle size of component (C) is preferably ≤ 100 µm, and more preferably is within tne range of 0.1 to 50 µm. Component (C) is preferably a zinc carbonate powder whose surface has been treated with an organosilicon compound selected from organosilanes, organosilazanes, organosiloxane oligomers, and mixtures of the preceding. The organosilicon compound used as the surface treatment agent for component (C) is exemplified by organochlorosilanes such as trimethylchlorosilane, dimethylchlorosilane, and methyltrichlorosilane; organotrialkoxysilanes such as methyltrimethoxysilane, methyltriethoxysilane, phenyltrimethoxysilane, ethyltrimethoxysilane, n-propyltrimethoxysilane, vinyltrimethoxysilane, vinyltriacetoxysilane, allyltrimethoxysilane, butenyltrimethoxysilane, hexenyltrimethoxysilane, and γ-methacryloxypropyltrimethoxysilane; diorganodialkoxysilanes such as dimethyldimethoxysilane, dimethyldiethoxysilane, and diphenyldimethoxysilane; triorganoalkoxysilanes such as trimethylmethoxysilane or trimethylethoxysilane; the partial condensates of the preceding orgonoalkoxysilanes; organosiloxanes such as hexamethyldisilazane or divinyltetramethyldisilazane; silanol, alkenyl-, or alkoxy-functional organosiloxane oligomers; and silanol-, alkenyl-, or alkoxy-functional organosilicon resins composed of the SiO₂ unit (Q unit) and R¹SiO_{3/2} unit (T unit). In these units R¹ is a monovalent hydrocarbon group, for example, alkyl such as methyl, ethyl, and propyl; alkenyl such as vinyl or allyl; and aryl such as phenyl. The surface of component(C) may be treated in a preliminary step in which the organosilicon compound, functioning as surface treatment agent is added to component (C) followed by mixing in a mixing means, such as a mixer, or it may be treated *in situ* during preparation of our claimed HC silicone rubber composition. Component (C) is added at from 50 to 200 weight parts, per 100 weight parts component (A). The addition of less component (C) will not provide acceptable high-voltage electrical insulating properties, and the addition of more than 200 weight parts of (C) can reduce the mechanical strength of our desired composition.

The organoperoxide (D) is a during agent that cures our composition upon the application of heat. The organoperoxides generally known for use as curing agents for HC silicone rubber compositions are used herein as component (D). These organoperoxides are exemplified by benzoyl peroxide, tert-butyl perbenzoate, o-methylbenzoyl peroxide, p-methylbenzoyl peroxide, dicumyl peroxide, and 2,5-dimethyl-2,5-di(tert-butylperoxy)hexane.

The aluminum hydroxide powder (E) provides excellent high-voltage electrical insulating properties when used in combination with our component (C). The surface of component (E) is preferably also treated with an organosilicon compound selected from organosilanes, organosilazanes, organosiloxane oligomers, and mixtures. The particle size of component (E) is from 0.1 to 50 µm, and preferably is from 0.1 to 10 µm. As for component (C), the surface of component(E) may be treated in a preliminary step in which the organosilicon compound functioning as surtace treatment agent, is added to component (E) followed by mixing in a mixing means such as a mixer; or it may be treated *in situ* during preparation of our HC silicone rubber. Component (E) is added at from 5 to 200 weight parts, per 100 weight parts of component (A).

The present composition, comprising components (A) to (D) or (A) to (E), may additionally contain, insofar as the object of the invention is not impaired, the various additives known in the art, for example, pigments, heat stabilizers, and internal release agents. These pigments are exemplified by titanium oxide, carbon black, and iron oxide red. The heat stabilizers are exemplified by rare-earth oxides, rare-earth hydroxides, cerium silanolate, and the fatty acid salts of cerium.

The present composition is prepared simply by mixing components (A) to (D) or (A) to (E) to homogeneity in their prescribed quantities. The mixing sequence for components (A) to (E) is not critical. However, in a preferred sequence, a silicone rubber base compound is first prepared by mixing components (A) to (C), or (A), (B), (C), and (E), to homogeneity using a known mixer, such as a kneader mixer, continuous twin-screw compounding extruder, or two-roll mill. Afterward, Component (D) is homogeneously mixed into the base compound using a mixer selected from above.

The present composition cures to give a silicone rubber that exhibits excellent electrical insulating properties; and our composition is therefore highly qualified for use in applications that require such properties, for example, as electrical insulation in high-voltage electrical devices and instruments.

The present invention will be explained below through working examples. In the examples, "part" indicates "weight part" and the values reported for the viscosity were measured at 25°C. The physical properties reported in the examples were measured By JIS K 6301. The electrical properties were measured by the following methods.

Electrical property measurements were conducted using with JIS C 2123, "Test Methods for Electrical Silicone Rubber Compounds". A "High Resistance Meter 4339A" from Hewlett-Packard™ was used for volume resistivity measurements. The dielectric constant and dielectric dissipation factors were measured at 110 Hz using an instrument for measuring dielectric loss (Model TR-1100 from Ando™ Electric Co., Ltd.). The tracking test was run in accordance with the inclined plane anti-tracking test of IEC Publication 587 using a Model HAT-520 from, Hitachi™ Kasei Kogyo Kabushiki Kaisha. The test voltage was 3.5 kV. The criterion A referenced in the tables refers to the time required until the current flowing in a high-voltage circuit through the test specimen exceeded 60 mA. The criterion B referenced in the tables refers to the time for tracking to reach a mark placed on the surface of the test specimen at a position 25 mm from the lower electrode.

Example 1. 100 parts of vinyldimethylsiloxy-endblocked dimethylsiloxane-vinylmethylsiloxane copolymer gum (degree of polymerization(DP) = 3,000, 99.87 mole% dimethylsiloxy units and 0.13 mole% vinylmethylsiloxy units) was mixed to homogeneity using a kneader mixer with 30 parts of dimethyldichlorosilane-created fumed silica (specific surface = 120 m²/g) and 3 parts of silanol-endblocked polydimethylsiloxane (viscosity = 30 mPa.s) as plasticizer. This was followed by addition of 150 parts of zinc carbonate (average particle size = 10 µm) without heating to give a silicone rubber base compound.

0.8 part of a 50 weight% silicone oil paste master batch of 2,5-dimethyl-2,5-di(tert-butylperoxy)hexane was kneaded to homogeneity on a two-roll mill into 100 parts of the above silicone rubber base compound to give a (HC) silicone rubber composition.

A 2 mm-thick silicone rubber sheet was molded By press vulcanizing this composition at 170°C for 10 minutes. The electrical and physical properties were measured on this sheet, and the results are reported in Table 1.

Comparative Example 1. A HC silicone rubber composition was prepared as in Example 1 without the zinc carbonate powder that was used in Example 1. The electrical and physical properties were also measured on this composition as in Example 1, and the results are listed in Table 1.

**Table 1.**

| | Example 1 | Comparative Example 1 |
|---|---|---|
| **composition** | | |
| zinc carbonate powder (parts) | 150 | - |

| **physical properties** | | |
|---|---|---|
| durometer (JIS A) | 55 | 30 |
| tensile strength (MPa) | 2.8 | 8.5 |
| elongation (%) | 500 | 750 |
| tear strength (A) (N/mm) | 14 | 12 |

| **tracking resitance** | | |
|---|---|---|
| criterion A (minutes) | ≥ 360 | 55 |
| criterion B (minutes) | ≥ 360 | 35 |

| **electrical properties** | | |
|---|---|---|
| volume resistivity (Ω-cm) | 3.0 × 10¹³ | 1.5 × 10¹⁵ |
| dielectric constant | 4.8 | 3.6 |
| dielectric dissipation factor | 8.9 × 10⁻² | 9.0 × 10⁻³ |

Example 2. The procedure of Example 1 were repeated to produce 150 parts zinc.

0.8 Part of a 50 weight% silicone oil paste master batch of 2,5-dimethyl-2,5-di(tert-butylperoxy)hexane was kneaded a HC silicone rubber composition with a Williams plasticity of 450 mm/100. The procedures of Example 2 were different from Example 1 in that 1.5 parts of vinyltrimethoxysilane were added to the zinc carbonate with additional mixing. The resulting mixture was heated at 100°C for 30 minutes to give the silicone rubber base compound latter admixed with the silicone oil paste.

A 2 mm-thick silicone rubber sheet was again prepared as in Example 1. The electrical and physical properties were measured on this silicone rubber sheet, and the results are enumerated in Table 2.

Example 3. The procedures of Example 1 were again repeated 100 parts of zinc carbonate (average particle size = 10 µm) and 50 parts of aluminum hydroxide, and 1.5 parts vinyltrimethysilane with additional mixing. The resulting mixture was heated at 100°C for 30 minutes to give a silicone rubber base compound.

0.8 part of a 50 weight% silicone oil paste master batch of 2,5-dimethyl-2,5-di(tert-butylperoxy)hexane was kneaded to homogeneity on a two-roll mill into 100 parts of the above silicone rubber base compound to give a HC silicone rubber composition with a Williams plasticity of 380 mm/100.

A 2 mm-thick silicone rubber sheet was again prepared as in Example 1. The electrical and physical properties were measured on this silicone rubber sheer, and the results are given in Table 2.

**Table 2.**

| | Example 2 | Example 3 |
|---|---|---|
| **composition** | | |
| zinc carbonate powder (parts) | 150 | 100 |
| aluminum hydroxide powder (parts) | - | 50 |

| **physical properties** | | |
|---|---|---|
| durometer (JIS A) | 83 | 77 |
| tensile strength (MPa) | 5.3 | 4.3 |
| elongation (%) | 120 | 150 |
| tear strength (A) (N/mm) | 16 | 12 |

| **tracking resitance** | | |
|---|---|---|
| criterion A (minutes) | ≥ 360 | ≥ 360 |
| criterion B (minutes) | ≥ 360 | ≥ 360 |

| **electrical properties** | | |
|---|---|---|
| volume resistivity (Ω-cm) | 7.0 × 10¹³ | 1.5 ×10¹⁴ |
| dielectric constant | 5.5 | 4.0 |
| dielectric dissipation factor | 6.6 × 10⁻² | 1.8 × 10⁻³ |

Example 4. The procedures of Example 1 using 150 parts of zinc carbonate (average particle size = 10 µm), and as surface-treatment agent, 2 parts of hexamethyldisilazane and 0.6 part of water. The resulting mixture was heated at 120°C for 1 hour under a vacuum to give a silicone rubber base compound.

0.8 part of a 50 weight% silicone oil paste master batch of 2,5-dimethyl-2,5-di-(tert-butylperoxy)hexane was kneaded to homogeneity on two-roll mill into 100 parts of the above silicone rubber base compound to give a HC silicone rubber composition.

A 2 mm-thick silicone rubber sheet was prepared as in Example 1 using this latter HC silicone rubber composition. The electrical and physical properties were measured on this silicone rubber sheet, and the results are provided in Table 3.

Example 5. The procedures of Example 1 were again repeated, but omitting the 3 parts of silanol plasticizer, and 6 parts of silanol-endblocked polydimethylsiloxane (viscosity = 30 mPa.s). The resulting mixture was heated 120°C for 1 hour to give a silicone rubber base compound.

0.8 part of a 50 weight% silicone oil paste master batch of 2,5-dimethyl-2,5-di(tert-butylperoxy)hexane was kneaded to homogeneity on a two-roll mill into 100 parts of the above silicone rubber base compound to give a HC silicone rubber composition.

A 2 mm-thick silicone rubber sheet was again prepared as in Example 1. The electrical and physical properties were measured on this silicone rubber sheet, and the results are shown in Table 3.

**Table 3.**

| | Example 4 | Example 5 |
|---|---|---|
| **composition** | | |
| zinc carbonate powder (parts) | 150 | 150 |

| **physical properties** | | |
|---|---|---|
| durometer (JIS A) | 73 | 70 |
| tensile strength (MPa) | 2.9 | 2.5 |
| elongation (%) | 500 | 610 |
| tear strength (A) (N/mm) | 16 | 12 |

| **tracking resitance** | | |
|---|---|---|
| criterion A (minutes) | ≥ 360 | ≥ 360 |
| criterion B (minutes) | ≥ 360 | ≥ 360 |

| **electrical properties** | | |
|---|---|---|
| volume resistivity (Ω-cm) | 1.2 × 10¹⁴ | 1.5 ×10¹⁴ |
| dielectric constant | 4.4 | 4.0 |
| dielectric dissipation factor | 1.4 × 10⁻² | 9.0 × 10⁻³ |

## Claims

1. A method of preparing a cured silicone powder inhibited from evolving unpleasant odors with the passage of time, comprising treating the surface of a cured silicone powder by dipping the cured silicone powder in an aqueous alkaline solution.

2. A method according to Claim 1 wherein the cured silicone powder is prepared by curing a curable silicone composition while the curable silicone composition is dispersed in an aqueous surfactant solution and drying the cured silicone powder, or by simultaneously curing and drying a curable silicone composition while the curable silicone composition is dispersed in an aqueous surfactant solution.

3. A method according to Claim 2 wherein the curable silicone composition is selected from the group consisting of addition reaction-curing silicone compositions, dehydrogenative condensation reaction-curing silicone compositions, alcohol-eliminating condensation reaction-curing silicone compositions, and dehydration condensation reaction-curing silicone compositions.

4. A method according to Claim 2 in which the surfactant is a nonionic surfactant.

5. A method according to Claim 4 in which the surfactant contains polyoxyethylene chain.

6. A method according to claim 1 in which the aqueous alkaline solution contains an alkali selected from the group consisting of alkali metal and alkaline-earth metal hydroxides; alkali metal and alkaline-earth metal salts of inorganic acids; ammonia; alkali metal and alkaline-earth metal salts of carboxylic acids; amine compounds; nitrogenous heterocyclic compounds; and mixtures of two or more alkali.

7. A cured silicone powder prepared according to the method defined in Claim 1.

8. A cured silicone powder according to Claim 7 in which the cured silicone powder has a hydrogen ion exponent (pH) in aqueous ethanol solution of 6 to 8.

9. A cured silicone powder according to Claim 8 in which the cured silicone powder is a gel, a rubber, or a hard resin.
